# EUROPEAN PATENT SPECIFICATION

(11) **EP 3 002 304 B1**
(45) Date of publication and mention of the grant of the patent: **02.08.2017**
(21) Application number: 15188235.4
(22) Date of filing: 02.10.2015
(51) Int. Cl.: C08G 59/42, C08G 59/50, C08G 59/68, C09J 163/00

(54) **CURABLE COMPOSITION**
HÄRTBARE ZUSAMMENSETZUNG
COMPOSITION DURCISSABLE

(30) Priority: 03.10.2014 JP 2014205277; 29.09.2015 JP 2015192340
(43) Date of publication of application: 06.04.2016
(73) Proprietor: TOKYO OHKA KOGYO CO., LTD., Kawasaki-shi, Kanagawa 211-0012 (JP)
(72) Inventor: CHISAKA, Hiroki, KANAGAWA, 211-0012 (JP); NODA, Kunihiro, KANAGAWA, 211-0012 (JP); SHIOTA, Dai, KANAGAWA, 211-0012 (JP)
(74) Representative: Cabinet Plasseraud

(56) References cited:
- EP-A1- 2 774 939
- EP-A1- 2 930 200
- US-A- 5 623 023
- FUNG FUH WONG ET AL: "New investigation of 1-substituted imidazole derivatives as thermal latent catalysts for epoxy-phenolic resins", JOURNAL OF APPLIED POLYMER SCIENCE, vol. 104, no. 5, 5 June 2007 (2007-06-05), pages 3292-3300, XP055251573, US ISSN: 0021-8995, DOI: 10.1002/app.26002

## Description

### BACKGROUND OF THE INVENTION

### Field of the Invention

The present invention relates to a curable composition including an (A) epoxy compound and a (B) reactive non-epoxy compound having a specific structure; an adhesive comprising the curable composition; a method for producing a fiber-reinforced composite material using the curable composition; and a fiber-reinforced composite material comprising a matrix consisting of a cured article of the curable composition, and a reinforcing fiber.

### Related Art

A curable composition including an epoxy compound, a curing agent, and a curing catalyst has widely been used in various applications such as adhesive applications, sealing applications of various electronic components, and matrix formation applications of fiber-reinforced composite materials.

There has been proposed, as a curable composition containing an epoxy compound to be used in these applications, for example, a curable composition including a (A) tetraglycidylamine type epoxy compound, (B) dicyandiamide, (C) diaminodiphenylsulfone, and a (D) urea compound, wherein viscosities at 40°C and a curing starting temperature are within a specific range (see Patent Document 1).

Patent Document 2 discloses a curable composition consisting of:
- 50 parts by weight of 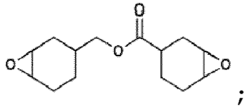
- 50 parts by weight of 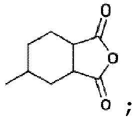
- 1.5 parts by weight of 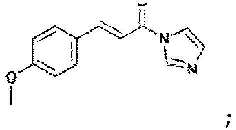 and
- 2 parts by weight of 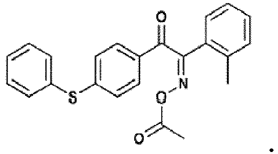 Patent Document 3 discloses two-pack epoxy resin compositions for fiber-reinforced composite materials comprising : [A] An epoxy resin [B] An acid anhydride [C] A compound that has an average of 2.5 or more hydroxyphenyl structures in each molecule [D] An organic phosphorus compound or imidazole derivative
   Patent Document 1: Japanese Unexamined Patent Application (Translation of PCT Application), Publication No. 2013-543035
   Patent Document 2: European Patent Application, Publication No 2 930 200
   Patent Document 3: EP 2 774 939 A1

### SUMMARY OF THE INVENTION

As mentioned in the Examples of Patent Document 1, the curable composition mentioned in Patent Document 1 is curable at a comparatively low temperature of about 130°C, however, curing of the curable composition requires a long time of about 2 hours.

In sealing applications of various electronic components and the production of the fiber-reinforced composite material, it is desired that the curable composition is sufficiently cured at a low temperature within a short time from the viewpoint of reduction of production cost and safety of an operation. However, the curable composition mentioned in Patent Document 1 cannot meet these requirements.

Usually, a type of an epoxy compound to be mixed in the curable composition is selected from a wide choice of types in consideration of various properties such as transparency, mechanical properties, and chemical resistance of a cured article. On the contrary, the curable composition mentioned in Patent Document 1 also has a problem in that the epoxy compound that can be chosen is limited to a significantly narrow range; namely, a tetraglycidylamine type epoxy compound.

General requirements for a curable composition including an epoxy compound include a long pot life in which properties such as viscosity do not change during long-term storage.

In light of the above problems, the present invention has been made and an object thereof is to provide a curable composition which is curable at a low temperature within a short time regardless of the type of epoxy compound to be mixed, and also exhibits a long pot life; an adhesive comprising the curable composition; a method for producing a fiber-reinforced composite material using the curable composition; and a fiber-reinforced composite material comprising a matrix consisting of the curable composition.

The present inventors have found that the above problems can be solved by mixing an (A) epoxy compound, (B) at least one crosslinking agent selected from the group consisting of a polyhydric amine compound and a polyhydric carboxylic anhydride, and a (C) compound which is an imidazolyl group-containing compound having a predetermined structure in a curable composition, and thus the present invention has been completed.

A first aspect of the present invention provides a curable composition comprising an (A) epoxy compound, (B) at least one crosslinking agent selected from the group consisting of a polyhydric amine compound and a polyhydric carboxylic anhydride, and a (C) compound represented by the following formula (C1): 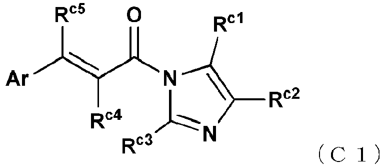 where in the formula (C1) , R^{c1}, R^{c2}, and R^{c3} each independently represent a hydrogen atom, a halogen atom, a hydroxyl group, a mercapto group, a sulfide group, a silyl group, a silanol group, a nitro group, a nitroso group, a sulfonato group, a phosphino group, a phosphinyl group, a phosphonato group, or an organic group; R^{c4} and R^{c5} each independently represent a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, or an organic group; and Ar is an optionally substituted aromatic group; provided that said composition does not consist of:
- 50 parts by weight of 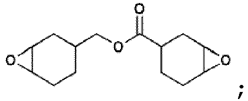
- 50 parts by weight of 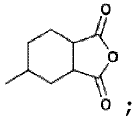
- 1.5 parts by weight of 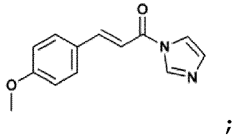 and
- 2 parts by weight of

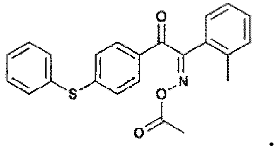

A second aspect of the present invention provides an adhesive comprising the curable composition according to the first aspect.

A third aspect of the present invention provides a method for producing a fiber-reinforced composite material, which comprises curing the curable composition according to the first aspect, in which a reinforcing fiber is impregnated, by heating.

A fourth aspect of the present invention provides a fiber-reinforced composite material comprising a matrix consisting of a cured article of curable composition according to the first aspect, and a reinforcing fiber.

According to the present invention, it is possible to provide a curable composition which is curable at a low temperature within a short time regardless of the type of epoxy compound to be mixed, and also exhibits a long pot life; an adhesive comprising the curable composition; a method for producing a fiber-reinforced composite material using the curable composition; and a fiber-reinforced composite material comprising a matrix consisting of the curable composition.

### DETAILED DESCRIPTION OF THE INVENTION

### Curable Composition

The curable compound includes an (A) epoxy compound, (B) at least one crosslinking agent selected from the group consisting of a polyhydric amine compound and a polyhydric carboxylic anhydride (hereinafter also referred to as the (B) crosslinking agent), and a (C) compound represented by the following formula (C1). In such a curable composition, use of the (B) crosslinking agent in combination with the (C) compound represented by the following formula (C1) enables significant acceleration of a curing reaction which occurs between the (A) epoxy compound and the (B) crosslinking agent even at a low temperature, for example, about 100 to 160°C. Therefore, such a curable composition gives a cured article having excellent mechanical properties even in the case of curing at a low temperature within a short time. 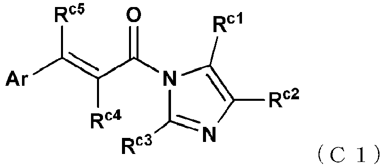 (where in the formula (C1), R^{c1}, R^{c2}, and R^{c3} each independently represent a hydrogen atom, a halogen atom, a hydroxyl group, a mercapto group, a sulfide group, a silyl group, a silanol group, a nitro group, a nitroso group, a sulfonato group, a phosphino group, a phosphinyl group, a phosphonato group, or an organic group; R^{c4} and R^{c5} each independently represent a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, or an organic group; and Ar is an optionally substituted aromatic group.)

The curable composition may further include a (D) curing accelerator, which is an accelerator component other than a (C) compound represented by the formula (C1), for the purpose of accelerating the curing reaction.

The curable composition may also include a (S) solvent, for the purpose of adjusting viscosity and coatability. Essential or optional components included in the curable composition will be described in order below. (A) Epoxy Compound

An (A) epoxy compound is not particularly limited as long as it is a compound having an epoxy group. The (A) epoxy compound can be selected from various compounds having an epoxy group, which have conventionally been mixed in the curable composition. The (A) epoxy compound may be either a low-molecular compound having an epoxy group, which is a non-polymer, or a polymer having an epoxy group. Regarding the (A) epoxy compound, a non-polymer having an epoxy group, and a polymer having an epoxy group will be described in order below.

### [Non-Polymer having an Epoxy Group]

The non-polymer having an epoxy group is preferably an aliphatic epoxy compound having no aromatic group, in view of the fact that a cured article to be formed using the curable composition will have excellent mechanical properties. Of aliphatic epoxy compounds, an aliphatic epoxy compound having an alicyclic epoxy group is preferable since it gives a cured article which is excellent in transparency and hardness.

Specific examples of the aliphatic epoxy compound having an alicyclic epoxy group include 2-(3,4-epoxycyclohexyl-5,5-spiro-3,4-epoxy)cyclohexane-meta-dioxane, bis(3,4-epoxycyclohexylmethyl)adipate, bis(3,4-epoxy-6-methylcyclohexylmethyl)adipate, 3,4-epoxy-6-methylcyclohexyl-3',4'-epoxy-6'-methylcyclohexane carboxylate, ε-caprolactone-modified 3,4-epoxycyclohexylmethyl-3',4'-epoxycyclohexane carboxylate, trimethylcaprolactone-modified 3,4-epoxycyclohexylmethyl-3',4'-epoxycyclohexane carboxylate, β-methyl-δ-valerolactone-modified 3,4-epoxycyclohexylmethyl-3',4'-epoxycyclohexane carboxylate, methylenebis(3,4-epoxycyclohexane), di(3,4-epoxycyclohexylmethyl)ether of ethylene glycol, ethylenebis(3,4-epoxycyclohexane carboxylate), dioctyl epoxycyclohexahydrophthalate, di-2-ethylhexyl epoxycyclohexahydrophthalate, an epoxy resin having a tricyclodecene oxide group, and a compound represented by the following formulae (A1) to (A5). Of these specific examples of the alicyclic epoxy compound, an alicyclic epoxy compound represented by any one of the following formulae (A1) to (A4) is preferable, and an alicyclic epoxy compound represented by formula (A1) or (A2) is more preferable, since it gives a cured article which is excellent in transparency and also has high hardness. These alicyclic epoxy compounds can be used alone, or two or more thereof can be used in combination. 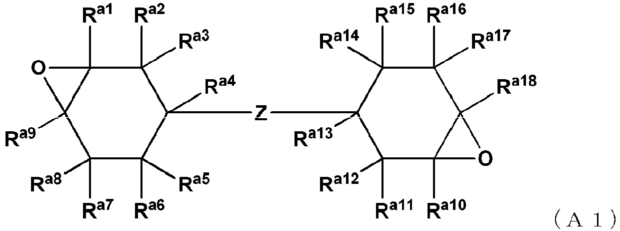 (where in the formula (A1), Z is a single bond, or a divalent group selected from the group consisting of -0-, -O-CO-, -S-, -SO-, -SO₂-, -CH₂-, -C(CH₃)₂-, -CBr₂-, -C(CBr₃)₂-, -C(CF₃)₂-, and -R^{a19}-O-CO-; R^{a19} is an alkylene group having 1 to 8 carbon atoms; and R^{a1} to R^{a18} each independently represent a group selected from the group consisting of a hydrogen atom, a halogen atom, and an organic group.) 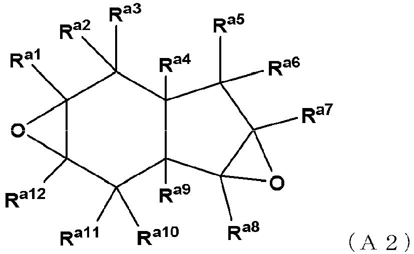 (where in the formula (A2), R^{a1} to R^{a12} each independently represent a group selected from the group consisting of a hydrogen atom, a halogen atom, and organic group; and R^{a2} and R^{a10} may be bonded to each other.) 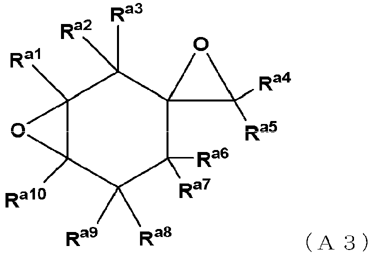 (where in the formula (A3), R^{a1} to R^{a10} each independently represent a group selected from the group consisting of a hydrogen atom, a halogen atom, and organic group; and R^{a2} and R^{a8} may be bonded to each other.) 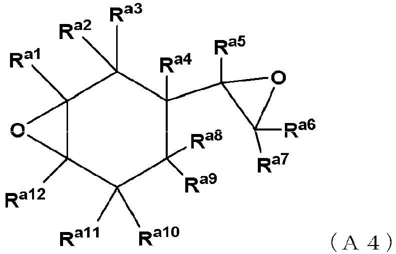 (where in the formula (A4), R^{a1} to R^{a12} each independently represent a group selected from the group consisting of a hydrogen atom, a halogen atom, and organic group; and R^{a2} and R^{a10} may be bonded to each other.) 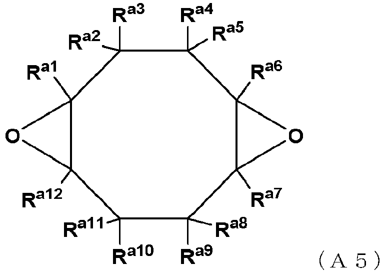 (where in the formula (A5), R^{a1} to R^{a12} each independently represents a group selected from the group consisting of a hydrogen atom, a halogen atom, and organic group.)

In the formula (A1), R^{a19} is an alkylene group having 1 to 8 carbon atoms, and is preferably a methylene group or an ethylene group.

In the formula (A1), when R^{a1} to R^{a18} are organic groups, the organic group is not particularly limited as long as the object of the present invention is not impaired, and may be a hydrocarbon group, or a group consisting of a carbon atom and a halogen atom, or a group having heteroatoms such as a halogen atom, an oxygen atom, a sulfur atom, a nitrogen atom, and a silicon atom, together with a carbon atom and a hydrogen atom. Examples of the halogen atom include a chlorine atom, a bromine atom, an iodine atom, and a fluorine atom.

The organic group is preferably a group consisting of a hydrocarbon group, a carbon atom, a hydrogen atom, and an oxygen atom; a group consisting of a halogenated hydrocarbon group, a carbon atom, an oxygen atom, and a halogen atom; and a group consisting of a carbon atom, a hydrogen atom, an oxygen atom, and a halogen atom. When the organic group is a hydrocarbon group, the hydrocarbon group may be an aromatic hydrocarbon group, or an aliphatic hydrocarbon group, or a group including an aromatic skeleton and an aliphatic skeleton. The number of carbon atoms of the organic group is preferably 1 to 20, more preferably 1 to 10, and particularly preferably 1 to 5.

Specific examples of the hydrocarbon group include chain alkyl groups such as a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, a 2-ethylhexyl group, an n-nonyl group, an n-decyl group, an n-undecyl group, an n-tridecyl group, an n-tetradecyl group, an n-pentadecyl group, an n-hexadecyl group, an n-heptadecyl group, an n-octadecyl group, an n-nonadecyl group, and an n-icosyl group; chain alkenyl groups such as a vinyl group, a 1-propenyl group, a 2-n-propenyl group(allyl group), a 1-n-butenyl group, a 2-n-butenyl group, and a 3-n-butenyl group; cycloalkyl groups such as a cyclopropyl group, a cyclobutyl group, a cyclopentyl group, a cyclohexyl group, and a cycloheptyl group; aryl groups such as a phenyl group, an o-tolyl group, an m-tolyl group, a p-tolyl group, an α-naphthyl group, a β-naphthyl group, a biphenyl-4-yl group, a biphenyl-3-yl group, a biphenyl-2-yl group, an anthryl group, and a phenanthryl group; and aralkyl groups such as a benzyl group, a phenethyl group, an α-naphthylmethyl group, a β-naphthylmethyl group, an α-naphthylethyl group, and a β-naphthylethyl group.

Specific examples of the halogenated hydrocarbon group include halogenated chain alkyl groups such as a chloromethyl group, a dichloromethyl group, a trichloromethyl group, a bromomethyl group, a dibromomethyl group, a tribromomethyl group, a fluoromethyl group, a difluoromethyl group, a trifluoromethyl group, a 2,2,2-trifluoroethyl group, a pentafluoroethyl group, a heptafluoropropyl group, a perfluorobutyl group, and a perfluoropentyl group, a perfluorohexyl group, a perfluoroheptyl group, a perfluorooctyl group, a perfluorononyl group, and a perfluorodecyl group; halogenated cycloalkyl groups such as a 2-chlorocyclohexyl group, a 3-chlorocyclohexyl group, a 4-chlorocyclohexyl group, a 2,4-dichlorocyclohexyl group, a 2-bromocyclohexyl group, a 3-bromocyclohexyl group, and a 4-bromocyclohexyl group; halogenated aryl groups such as a 2-chlorophenyl group, a 3-chlorophenyl group, a 4-chlorophenyl group, a 2,3-dichlorophenyl group, a 2,4-dichlorophenyl group, a 2,5-dichlorophenyl group, a 2,6-dichlorophenyl group, a 3,4-dichlorophenyl group, a 3,5-dichlorophenyl group, a 2-bromophenyl group, a 3-bromophenyl group, a 4-bromophenyl group, a 2-fluorophenyl group, a 3-fluorophenyl group, and a 4-fluorophenyl group; and halogenated aralkyl groups such as a 2-chlorophenylmethyl group, a 3-chlorophenylmethyl group, a 4-chlorophenylmethyl group, a 2-bromophenylmethyl group, a 3-bromophenylmethyl group, a 4-bromophenylmethyl group, a 2-fluorophenylmethyl group, a 3-fluorophenylmethyl group, and a 4-fluorophenylmethyl group.

Specific examples of the group consisting of a carbon atom, a hydrogen atom, and an oxygen atom include hydroxy chain alkyl groups such as a hydroxymethyl group, a 2-hydroxyethyl group, a 3-hydroxy-n-propyl group, and a 4-hydroxy-n-butyl group; halogenated cycloalkyl groups such as a 2-hydroxycyclohexyl group, a 3-hydroxycyclohexyl group, and a 4-hydroxycyclohexyl group; hydroxyaryl groups such as a 2-hydroxyphenyl group, a 3-hydroxyphenyl group, a 4-hydroxyphenyl group, a 2,3-dihydroxyphenyl group, a 2,4-dihydroxyphenyl group, a 2,5-dihydroxyphenyl group, a 2,6-dihydroxyphenyl group, a 3,4-dihydroxyphenyl group, and a 3,5-dihydroxyphenyl group; hydroxyaralkyl groups such as a 2-hydroxyphenylmethyl group, a 3-hydroxyphenylmethyl group, and a 4-hydroxyphenylmethyl group; chain alkoxy groups such as a methoxy group, an ethoxy group, an n-propoxy group, an isopropoxy group, an n-butyloxy group, an isobutyloxy group, a sec-butyloxy group, a tert-butyloxy group, an n-pentyloxy group, an n-hexyloxy group, an n-heptyloxy group, an n-octyloxy group, a 2-ethylhexyloxy group, an n-nonyloxy group, an n-decyloxy group, an n-undecyloxy group, an n-tridecyloxy group, an n-tetradecyloxy group, an n-pentadecyloxy group, an n-hexadecyloxy group, an n-heptadecyloxy group, an n-octadecyloxy group, an n-nonadecyloxy group, and an n-icosyloxy group; chain alkenyloxy groups such as a vinyloxy group, a 1-propenyloxy group, a 2-n-propenyloxy group (allyloxy group), a 1-n-butenyloxy group, a 2-n-butenyloxy group, and a 3-n-butenyloxy group; aryloxy groups such as a phenoxy group, an o-tolyloxy group, an m-tolyloxy group, a p-tolyloxy group, an α-naphthyloxy group, a β-naphthyloxy group, a biphenyl-4-yloxy group, a biphenyl-3-yloxy group, a biphenyl-2-yloxy group, an anthryloxy group, and a phenanthryloxy group; aralkyloxy groups such as a benzyloxy group, a phenethyloxy group, an α-naphthylmethyloxy group, a β-naphthylmethyloxy group, an α-naphthylethyloxy group, and a β-naphthylethyloxy group; alkoxyalkyl groups such as a methoxymethyl group, an ethoxymethyl group, an n-propoxymethyl group, a 2-methoxyethyl group, a 2-ethoxyethyl group, a 2-n-propoxyethyl group, a 3-methoxy-n-propyl group, a 3-ethoxy-n-propyl group, a 3-n-propoxy-n-propyl group, a 4-methoxy-n-butyl group, a 4-ethoxy-n-butyl group, and a 4-n-propoxy-n-butyl group; alkoxyalkoxy groups such as a methoxymethoxy group, an ethoxymethoxy group, an n-propoxymethoxy group, a 2-methoxyethoxy group, a 2-ethoxyethoxy group, a 2-n-propoxyethoxy group, a 3-methoxy-n-propoxy group, a 3-ethoxy-n-propoxy group, a 3-n-propoxy-n-propoxy group, a 4-methoxy-n-butyloxy group, a 4-ethoxy-n-butyloxy group, and a 4-n-propoxy-n-butyloxy group; alkoxyaryl groups such as a 2-methoxyphenyl group, a 3-methoxyphenyl group, and a 4-methoxyphenyl group; alkoxyaryloxy groups such as a 2-methoxyphenoxy group, a 3-methoxyphenoxy group, and a 4-methoxyphenoxy group; aliphatic acyl groups such as a formyl group, an acetyl group, a propionyl group, a butanoyl group, a pentanoyl group, a hexanoyl group, a heptanoyl group, an octanoyl group, a nonanoyl group, and a decanoyl group; aromatic acyl groups such as a benzoyl group, an α-naphthoyl group, and a β-naphthoyl group; chain alkyloxycarbonyl groups such as a methoxycarbonyl group, an ethoxycarbonyl group, an n-propoxycarbonyl group, an n-butyloxycarbonyl group, an n-pentyloxycarbonyl group, an n-hexylcarbonyl group, an n-heptyloxycarbonyl group, an n-octyloxycarbonyl group, an n-nonyloxycarbonyl group, and an n-decyloxycarbonyl group; aryloxycarbonyl groups such as a phenoxycarbonyl group, an α-naphthoxycarbonyl group, and a β-naphthoxycarbonyl group; aliphatic acyloxy groups such as a formyloxy group, an acetyloxy group, a propionyloxy group, a butanoyloxy group, a pentanoyloxy group, a hexanoyloxy group, a heptanoyloxy group, an octanoyloxy group, a nonanoyloxy group, and a decanoyloxy group; and aromatic acyloxy groups such as a benzoyloxy group, an α-naphthoyloxy group, and a β-naphthoyloxy group.

R^{a1} to R^{a18} are preferably each independently a group selected from the group consisting of a hydrogen atom, a halogen atom, an alkyl group having 1 to 5 carbon atoms, and an alkoxy group having 1 to 5 carbon atoms and, particularly, all R^{a1} to R^{a18} are more preferably hydrogen atoms in view of the fact that a cured article obtained by using a curable composition has excellent mechanical properties.

In the formulae (A2) to (A5), R^{a1} to R^{a18} are the same as those in the formula (A1). In the formulae (A2) and (A4), examples of a divalent group formed by bonding of R^{a2} and R^{a10} include -CH₂- and -C(CH₃)₂-. In the formula (A3) examples of a divalent group formed by bonding of R^{a2} and R^{a8} include -CH₂-and -C(CH₃)₂-.

Specific examples of a suitable compound for the alicyclic epoxy compounds represented by the formula (A1) include the following compounds 1 and 2.

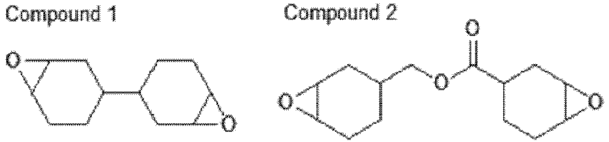

Specific examples of the preferable alicyclic epoxy compound represented by the formula (A2) include bicyclononadiene diepoxide and the like. Specific examples of the preferable alicyclic epoxy compound represented by the formula (A3) include (S) -spiro[3-oxatricyclo[3.2.1.0^{2,4}]octane-6,2'-oxirane] and the like. Specific examples of the preferable alicyclic epoxy compound represented by the formula (A4) include 4-vinylcyclohexene dioxide, dipentene dioxide, limonene dioxide, 1-methyl-4-(3-methyloxirane-2-yl)-7-oxabicyclo[4.1.0]heptane and the like. Specific examples of the preferable alicyclic epoxy compound represented by the formula (A5) include 1,2,5,6-diepoxycyclooctane and the like.

Examples of the non-polymer having an epoxy group other than the above-described aliphatic epoxy compound having an alicyclic epoxy group, which can be used as the (A) epoxy compound, include epoxyalkyl (meth)acrylates such as glycidyl (meth)acrylate, 2-methylglycidyl (meth)acrylate, 3,4-epoxybutyl (meth)acrylate, and 6,7-epoxyheptyl (meth)acrylate; epoxyalkyloxyalkyl (meth)acrylates such as 2-glycidyloxyethyl (meth)acrylate, 3-glycidyloxy-n-propyl (meth)acrylate, 4-glycidyloxy-n-butyl (meth)acrylate, 5-glycidyloxy-n-hexyl (meth)acrylate, and 6-glycidyloxy-n-hexyl (meth)acrylate; difunctional epoxy resins such as a bisphenol A type epoxy resin, a bisphenol F type epoxy resin, a bisphenol S type epoxy resin, a bisphenol AD type epoxy resin, a naphthalene type epoxy resin, and a biphenyl type epoxy resin; novolak epoxy resins such as a phenol novolak type epoxy resin, a brominated phenol novolak type epoxy resin, an orthocresol novolak type epoxy resin, a bisphenol A novolak type epoxy resin, and a bisphenol AD novolak type epoxy resin; cyclic aliphatic epoxy resins such as an epoxidized material of a dicyclopentadiene type phenol resin; aromatic epoxy resins such as an epoxidized material of a naphthalene type phenol resin; epoxy group-containing fluorene compounds such as 9,9-bis[4-(glycidyloxy)phenyl]-9H-fluorene, 9,9-bis[4-[2-(glycidyloxy)ethoxy]phenyl]-9H-fluorene, 9,9-bis[4-[2-(glycidyloxy)ethyl]phenyl]-9H-fluorene, 9,9-bis[4-(glycidyloxy)-3-methylphenyl]-9H-fluorene, 9,9-bis[4-(glycidyloxy)-3,5-dimethylphenyl]-9H-fluorene, and 9,9-bis(6-glycidyloxynaphthalen-2-yl)-9H-fluorene; glycidyl ester type epoxy resins such as a dimer acid glycidyl ester and a triglycidyl ester; glycidylamine type epoxy resins such as tetraglycidyl aminodiphenylmethane, triglycidyl-p-aminophenol, tetraglycidyl metaxylylenediamine, and tetraglycidyl bisaminomethylcyclohexane; heterocyclic epoxy resins such as triglycidyl isocyanurate; trifunctional type epoxy resins such as phloroglucinol triglycidyl ether, trihydroxybiphenyl triglycidyl ether, trihydroxyphenylmethane triglycidyl ether, glycerin triglycidyl ether, 2-[4-(2,3-epoxypropoxy)phenyl]-2-[4-[1,1-bis[4-(2,3-epoxypropoxy)phenyl]ethyl]phenyl]propane, and 1,3-bis[4-[1-[4-(2,3-epoxypropoxy)phenyl]-1-[4-[1-[4-(2,3-epoxypropoxy)phenyl]-1-methylethyl]phenyl]ethyl]phenoxy]-2-propanol; tetrafunctional type epoxy resins such as tetrahydroxyphenylethane tetraglycidyl ether, tetraglycidylbenzophenone, bisresorcinol tetraglycidyl ether, and tetraglycidoxybiphenyl; and a 1,2-epoxy-4-(2-oxiranyl)cyclohexane adduct of 2,2-bis(hydroxymethyl)-1-butanol. The 1,2-epoxy-4-(2-oxiranyl)cyclohexane adduct of 2,2-bis(hydroxymethyl)-1-butanol is commercially available as EHPE-3150 (manufactured by Daicel Corporation).

### [Polymer having an Epoxy Group]

The polymer having an epoxy group may be either a polymer obtained by polymerizing a monomer having an epoxy group or a monomer mixture containing a monomer having an epoxy group, or a polymer obtained by introducing an epoxy group into a polymer having a functional group with reactivity, such as a hydroxyl group, a carboxyl group, or an amino group, using a compound having an epoxy group, for example, epichlorohydrin. It is also possible to suitably use, as the polymer having an epoxy group, a partial oxide of a polymer having an unsaturated aliphatic hydrocarbon group in a side chain, such as 1,2-polybutadiene. Such a partial oxide has an epoxy group formed by oxidation of an unsaturated bond contained in a side chain.

Because of ease of availability, preparation, and adjustment of the amount of epoxy groups in the polymer, the polymer having an epoxy group is preferably a polymer obtained by polymerizing a monomer having an epoxy group or a monomer mixture containing a monomer having an epoxy group, and a partial oxide of a polymer having an unsaturated aliphatic hydrocarbon group in a side chain.

### (Polymer of Monomer having an Epoxy Group or Monomer Mixture including Monomer having an Epoxy Group)

In view of ease of preparation and coatability of a curable composition onto a base material, the polymer having an epoxy group is preferably a homopolymer of a (meth)acrylic acid ester having an epoxy group, or a copolymer of a (meth)acrylic acid ester having an epoxy group with the other monomer.

The (meth)acrylic acid ester having an epoxy group may be either a chain aliphatic (meth)acrylic acid ester having an epoxy group, or the below-mentioned alicyclic (meth)acrylic acid ester having an epoxy group. The (meth)acrylic acid ester having an epoxy group may have an aromatic group. In view of transparency of a cured article formed using a curable composition, the (meth)acrylic acid ester having an epoxy group is preferably an aliphatic (meth)acrylic acid ester having a chain aliphatic epoxy group or an aliphatic (meth)acrylic acid ester having an alicyclic epoxy group, and more preferably an aliphatic (meth)acrylic acid ester having an alicyclic epoxy group.

Examples of the (meth)acrylic acid ester, which has an aromatic group and an epoxy group, include 4-glycidyloxyphenyl (meth)acrylate, 3-glycidyloxyphenyl (meth)acrylate, 2-glycidyloxyphenyl (meth)acrylate, 4-glycidyloxyphenylmethyl (meth)acrylate, 3-glycidyloxyphenylmethyl (meth)acrylate, and 2-glycidyloxyphenylmethyl (meth)acrylate.

Examples of the aliphatic (meth)acrylic acid ester having a chain aliphatic epoxy group include (meth)acrylic acid esters in which a chain aliphatic epoxy group is combined with an oxy group (-0-) in an ester group (-O-CO-), such as epoxyalkyl (meth)acrylate and epoxyalkyloxyalkyl (meth)acrylate. Such a chain aliphatic epoxy group possessed by the (meth)acrylic acid ester may have one or plural oxy group(s) (-0-) in a chain. The number of carbon atoms of the chain aliphatic epoxy group is not particularly limited, and is preferably 3 to 20, more preferably 3 to 15, and particularly preferably 3 to 10.

Specific examples of the aliphatic (meth)acrylic acid ester having a chain aliphatic epoxy group include epoxyalkyl (meth)acrylates such as glycidyl (meth)acrylate, 2-methyl glycidyl (meth)acrylate, 3,4-epoxybutyl (meth)acrylate, and 6,7-epoxyheptyl (meth)acrylate; and epoxyalkyloxyalkyl (meth)acrylates such as 2-glycidyloxyethyl (meth)acrylate, 3-glycidyloxy-n-propyl (meth)acrylate, 4-glycidyloxy-n-butyl (meth)acrylate, 5-glycidyloxy-n-hexyl (meth)acrylate, and 6-glycidyloxy-n-hexyl (meth)acrylate.

Specific examples of the aliphatic (meth)acrylic acid ester having an alicyclic epoxy group include compounds represented by the following formulae (a2-1) to (a2-15). Of these compounds, compounds represented by the following formulae (a2-1) to (a2-5) are preferable, and compounds represented by the following formulae (a2-1) to (a2-3) are more preferable.

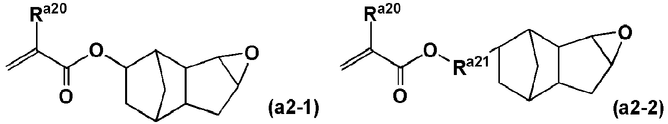

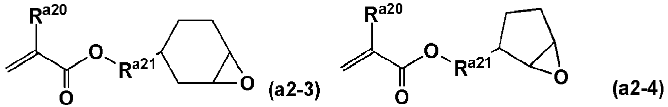

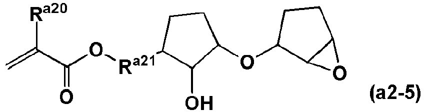

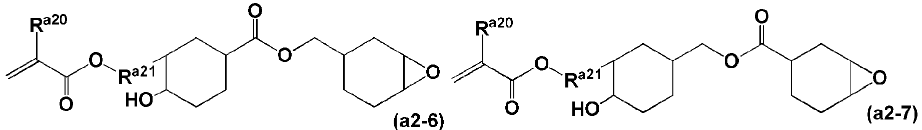

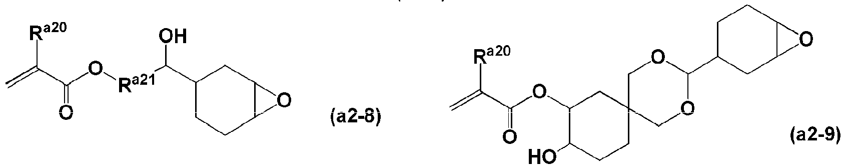

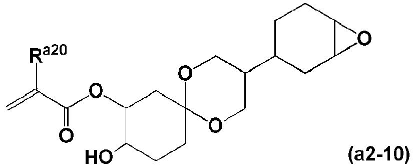

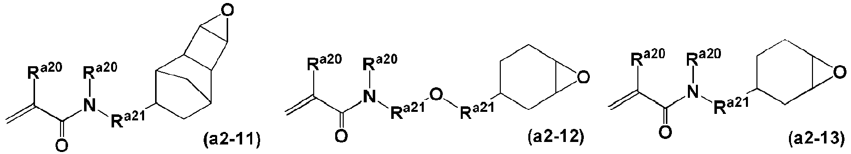

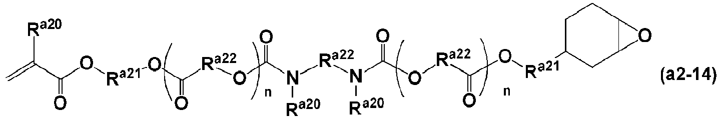

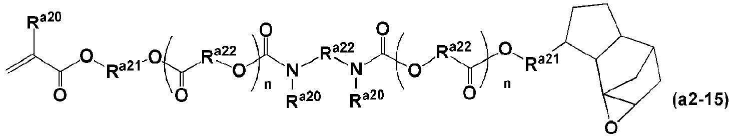

In the above formulae, R^{a20} represents a hydrogen atom or a methyl group; R^{a21} represents a divalent aliphatic saturated hydrocarbon group having 1 to 6 carbon atoms; R^{a22} represents a divalent hydrocarbon group having 1 to 10 carbon atoms; and n represents an integer of 0 to 10. R^{a21} is a linear or branched alkylene group and is preferably, for example, a methylene group, an ethylene group, a propylene group, a tetramethylene group, an ethylethylene group, a pentamethylene group, or a hexamethylene group. R^{a22} is preferably, for example, a methylene group, an ethylene group, a propylene group, a tetramethylene group, an ethylethylene group, a pentamethylene group, a hexamethylene group, a phenylene group, or a cyclohexylene group.

It is possible to use, as the polymer having an epoxy group, both of a homopolymer of a (meth)acrylic acid ester having an epoxy group, and a copolymer of a (meth)acrylic acid ester having an epoxy group with the other monomer. The content of a unit derived from the (meth)acrylic acid ester having an epoxy group in the polymer having an epoxy group is for example 50% by mass or more, preferably 70% by mass or more, more preferably 80% by mass or more, particularly preferably 90% by mass or more, and most preferably 100% by mass.

When the polymer having an epoxy group is a copolymer of the (meth)acrylic acid ester having an epoxy group with the other monomer, examples of the other monomer include an unsaturated carboxylic acid, a (meth)acrylic acid ester having no epoxy group, (meth)acrylamides, an allyl compound, vinyl ethers, vinyl esters, styrenes, and the like. These compounds can be used alone, or two or more thereof can be used in combination. In view of storage stability of a curable composition, and chemical resistance of a cured article formed using the curable composition against alkali, it is preferred that the copolymer of the (meth)acrylic acid ester having an epoxy group with the other monomer does not include a unit derived from an unsaturated carboxylic acid.

Examples of the unsaturated carboxylic acid include (meth)acrylic acid; (meth)acrylic acid amide; crotonic acid; maleic acid, fumaric acid, citraconic acid, mesaconic acid, itaconic acid, and anhydrides of these dicarboxylic acids.

Examples of the (meth)acrylic acid ester having no epoxy group include linear or branched alkyl (meth)acrylates such as methyl (meth)acrylate, ethyl (meth)acrylate, propyl (meth)acrylate, amyl (meth)acrylate, and t-octyl (meth)acrylate; chloroethyl (meth)acrylate, 2,2-dimethylhydroxypropyl (meth)acrylate, 2-hydroxyethyl (meth)acrylate, trimethylolpropane mono(meth)acrylate, benzyl (meth)acrylate, furfuryl (meth)acrylate; and a (meth)acrylic acid ester having a group with an alicyclic skeleton. Of (meth)acrylic acid esters having no epoxy group, a (meth)acrylic acid ester having a group with an alicyclic skeleton is preferable in view of transparency of a cured article formed using a curable composition.

In a (meth)acrylic acid ester having a group with an alicyclic skeleton, an alicyclic group composing the alicyclic skeleton may be either monocyclic or polycyclic. Examples of the monocyclic alicyclic group include a cyclopentyl group, a cyclohexyl group, and the like. Examples of the polycyclic alicyclic group include a norbornyl group, an isobornyl group, a tricyclononyl group, a tricyclodecyl group, a tetracyclododecyl group, and the like.

Examples of the (meth)acrylic acid ester having a group with an alicyclic skeleton include compounds represented by the following formulae (a3-1) to (a3-8). Of these compounds, compounds represented by the following formulae (a3-3) to (a3-8) are preferable, and compounds represented by the following formulae (a3-3) or (a3-4) are more preferable.

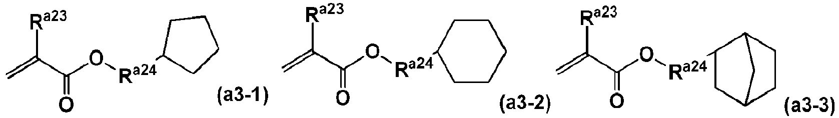

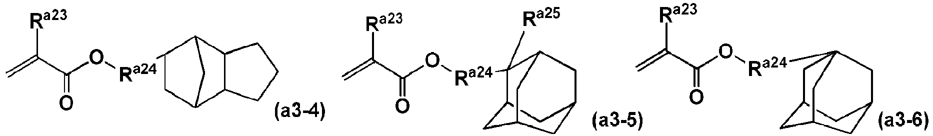

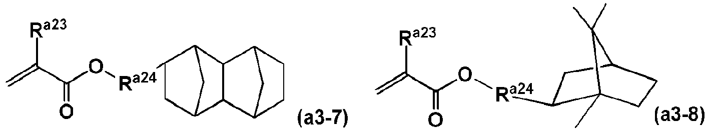

In the above formulae, R^{a23} represents a hydrogen atom or a methyl group; R^{a24} represents a single bond or a divalent aliphatic saturated hydrocarbon group having 1 to 6 carbon atoms; and R^{a25} represents a hydrogen atom or an alkyl group having 1 to 5 carbon atoms. R^{a24} is preferably a single bond, or a linear or branched alkylene group, for example, a methylene group, an ethylene group, a propylene group, a tetramethylene group, an ethylethylene group, a pentamethylene group, or a hexamethylene group. R^{a25} is preferably a methyl group or an ethyl group.

Examples of (meth)acrylamides include (meth)acrylamide, N-alkyl(meth)acrylamide, N-aryl(meth)acrylamide, N,N-dialkyl(meth)acrylamide, N,N-aryl(meth)acrylamide, N-methyl-N-phenyl(meth)acrylamide, N-hydroxyethyl-N-methyl(meth)acrylamide, and the like.

Examples of the allyl compound include allyl esters such as allyl acetate, allyl caproate, allyl caprylate, allyl laurate, allyl palmitate, allyl stearate, allyl benzoate, allyl acetoacetate, and allyl lactate; allyloxyethanol, and the like.

Examples of vinyl ethers include alkyl vinyl ethers such as hexyl vinyl ether, octyl vinyl ether, decyl vinyl ether, ethylhexyl vinyl ether, methoxyethyl vinyl ether, ethoxyethyl vinyl ether, chloroethyl vinyl ether, 1-methyl-2,2-dimethylpropyl vinyl ether, 2-ethylbutyl vinyl ether, hydroxyethyl vinyl ether, diethylene glycol vinyl ether, dimethylaminoethyl vinyl ether, diethylaminoethyl vinyl ether, butylaminoethyl vinyl ether, benzyl vinyl ether, and tetrahydrofurfuryl vinyl ether; vinylaryl ethers such as vinyl phenyl ether, vinyl tolyl ether, vinyl chlorophenyl ether, vinyl-2,4-dichlorophenyl ether, vinyl naphthyl ether, and vinyl anthranyl ether; and the like.

Examples of vinyl esters include vinyl butyrate, vinyl isobutyrate, vinyl trimethyl acetate, vinyl diethyl acetate, vinyl valerate, vinyl caproate, vinyl chloroacetate, vinyl dichloroacetate, vinyl methoxyacetate, vinyl butoxyacetate, vinyl phenylacetate, vinyl acetoacetate, vinyl lactate, vinyl-β-phenyl butyrate, vinyl benzoate, vinyl salicylate, vinyl chlorobenzoate, vinyl tetrachlorobenzoate, vinyl naphthoate, and the like.

Examples of styrenes include styrene; alkylstyrenes such as methylstyrene, dimethylstyrene, trimethylstyrene, ethylstyrene, diethylstyrene, isopropylstyrene, butylstyrene, hexylstyrene, cyclohexylstyrene, decylstyrene, benzylstyrene, chloromethylstyrene, trifluoromethylstyrene, ethoxymethylstyrene, and acetoxymethylstyrene; alkoxystyrenes such as methoxystyrene, 4-methoxy-3-methylstyrene, and dimethoxystyrene; halostyrenes such as chlorostyrene, dichlorostyrene, trichlorostyrene, tetrachlorostyrene, pentachlorostyrene, bromostyrene, dibromostyrene, iodostyrene, fluorostyrene, trifluorostyrene, 2-bromo-4-trifluoromethylstyrene, and 4-fluoro-3-trifluoromethylstyrene; and the like.

### (Partial Oxide of Polymer having Unsaturated Aliphatic Hydrocarbon Group in Side Chain)

The polymer having an unsaturated aliphatic hydrocarbon in a side chain is not particularly limited, and is preferably 1,2-polybutadiene having a vinyl group in a side chain in view of ease of availability and synthesis. An epoxidized polybutadiene having an oxiranyl group and a vinyl group in a side chain can be obtained by partially oxidizing 1,2-polybutadiene. The proportion of the oxiranyl group in the epoxidized polybutadiene is preferably 10 to 70 mol%, more preferably 10 to 50 mol%, and still more preferably 10 to 40 mol%, based on the total number of mols of the oxiranyl group and the vinyl group. It is possible to suitably use, as the epoxidized polybutadiene, JP-100 and JP-200 which are commercially available from NIPPON SODA CO., LTD.

The molecular weight of the above-described polymer having an epoxy group is not particularly limited as long as the object of the present invention is not impaired, and is preferably 3,000 to 30,000, and more preferably 5,000 to 15,000, in terms of a polystyrene-equivalent weight average molecular weight.

The content of the (A) epoxy compound in the curable composition is for example 40 to 95% by mass, preferably 45 to 90% by mass, more preferably 50 to 80% by mass, and further preferably 60 to 70% by mass based on the total of the mass of components other than the (S) solvent in the curable composition.

### (B) Crosslinking Agent

A (B) crosslinking agent is at least one selected from the group consisting of a polyhydric amine compound and a polyhydric carboxylic anhydride. The (B) crosslinking agent reacts with an epoxy group possessed by the (A) epoxy compound to allow the (A) epoxy compound to undergo intramolecular crosslinking, thus curing a curable composition. The polyhydric amine compound and the polyhydric carboxylic anhydride can be used by appropriately selecting from the polyhydric amine compound and the polyhydric carboxylic anhydride which have conventionally been used as a curing agent of an epoxy compound. The polyhydric amine compound and the polyhydric carboxylic anhydride will be described below.

### [Polyhydric Amine Compound]

The polyhydric amine compound is not particularly limited as long as it can react with the (A) epoxy compound to form a cured article. The polyhydric amine compound may be either a compound capable of reacting with the (A) epoxy compound as it is, or a so-called latent curing agent capable of reacting with the (A) epoxy compound in a state of being activated by heating. Suitable examples of the polyhydric amine compound include aromatic diamine, guanidine, substituted guanidine, biguanidine, substituted biguanidine, substituted urea, melamine resin, and guanamine derivative.

Suitable specific examples of the aromatic diamine include o-phenylenediamine, m-phenylenediamine, p-phenylenediamine, 3,3'-diaminodiphenyl ether, 3,4'-diaminodiphenyl ether, 4,4'-diaminodiphenyl ether, 3,3'-diaminodiphenylmethane, 3,4'-diaminodiphenylmethane, 4,4'-diaminodiphenyl ether methane, bis(4-amino-3,5-dimethylphenyl)methane, bis(4-amino-3,5-diisopropylphenyl)methane, 3,3'-diaminodiphenyldifluoromethane, 3,4'-diaminodiphenyldifluoromethane, 4,4'-diaminodiphenyldifluoromethane, 3,3'-diaminodiphenyl sulfone, 3,4'-diaminodiphenyl sulfone, 4,4'-diaminodiphenyl sulfone, 3,3'-diaminodiphenyl sulfide, 3,4'-diaminodiphenyl sulfide, 4,4'-diaminodiphenyl sulfide, 3,3'-diaminodiphenylketone, 3,4'-diaminodiphenylketone, 4,4'-diaminodiphenylketone, 2,2-bis(3-aminophenyl)propane, 2-(3-aminophenyl)-2-(4-aminophenyl)propane, 2,2-bis(4-aminophenyl)propane, and the like.

The substituted guanidine is a compound in which hydrogen atoms to be combined with nitrogen atoms included in guanidine are substituted with an organic group. The organic group may have heteroatoms such as N, 0, S, P, and halogen atoms. The organic group to be combined with nitrogen atoms possessed by the substituted guanidine is preferably a hydrocarbon group or a cyano group. The hydrocarbon group is preferably an alkyl group, more preferably an alkyl group having 1 to 6 carbon atoms, and still more preferably a methyl group.

Suitable specific examples of the substituted guanidine include methylguanidine, dimethylguanidine, trimethylguanidine, tetramethylguanidine, and dicyandiamide. Of these, dicyandiamide is preferable.

The substituted biguanidine is a compound in which hydrogen atoms to be combined with nitrogen atoms included in biguanidine are substituted with an organic group. The organic group may have heteroatoms such as N, 0, S, P, and halogen atoms. The organic group to be combined with nitrogen atoms possessed by the substituted biguanidine is preferably a hydrocarbon group or a cyano group. The hydrocarbon group is preferably an alkyl group, more preferably an alkyl group having 1 to 6 carbon atoms, and still more preferably a methyl group.

Suitable specific examples of the substituted biguanidine include methyl biguanidine, dimethyl biguanidine, tetramethyl biguanidine, hexamethyl biguanidine, and heptamethyl biguanidine.

The substituted urea is a compound in which hydrogen atoms to be combined with nitrogen atoms included in urea are substituted with an organic group. The organic group may have heteroatoms such as N, 0, S, P, and halogen atoms. The substituted urea may be a urea dimer represented by the following formula (B1) :

X¹X²N-CO-NX³-X⁷-NX⁶-CO-NX⁴X⁵... (B1)

(where in the formula (B1), X¹ to X⁶ each independently represent a hydrogen atom or an organic group, and X⁷ is a divalent organic group.)

Suitable specific examples of the substituted urea include N,N-dimethyl-N'-(3-chloro-4-methylphenyl)urea, N,N-dimethyl-N'-(4-chlorophenyl)urea, N,N-dimethyl-N'-(3,4-dichlorophenyl)urea, N,N-dimethyl-N'-phenylurea, 2,4-bis(N',N'-dimethylureide)toluene, 1,4-bis(N',N'-dimethylureide)benzene, dimethylpropyleneurea, and 1,3-hydroxymethylurea.

Suitable specific examples of the guanamine derivative include an alkylated benzoguanamine resin, a benzoguanamine resin, and a methoxymethylethoxymethylbenzoguanamine resin.

Of the above-described polyhydric amine compounds to be used as the (B) crosslinking agent, one or more compounds selected from the group consisting of guanidine, substituted guanidine, and aromatic diamine are preferable.

### [Polyhydric Carboxylic Anhydride]

The polyhydric carboxylic anhydride can be used by appropriately selecting from various acid anhydride compounds which have conventionally been used as a curing agent for epoxy resin. Specific examples of the polyhydric carboxylic anhydride include maleic anhydride, tetrahydrophthalic anhydride, hexahydrophthalic anhydride, 4-methylhexahydrophthalic anhydride, hexahydrotritrimellitic anhydride, phthalic anhydride, trimellitic anhydride, pyromellitic dianhydride, 3,3',4,4'-biphenyltetracarboxylic dianhydride, and a styrene-maleic anhydride copolymer. When the solvent is not separately used, the polyhydric carboxylic anhydride is preferably a compound which is liquid at room temperature.

The content of the (B) crosslinking agent in the curable composition is preferably 0.1 to 20% by mass, and more preferably 0.1 to 10% by mass, based on the total of the mass of components other than the (S) solvent in the curable composition.

### (C) Compound represented by Formula (C1)

The curable composition gives a cured article having excellent mechanical properties within a short time even in the case of curing at a low temperature by including a (C) compound represented by the following formula (C1) and the below-mentioned (D) compound represented by the formula (D1), together with the above-mentioned (A) epoxy compound and (B)reactive non-epoxy compound.

When the compound represented by the following formula (C1) is heated, an imidazole compound represented by the following formula (C2) is released. It is considered that acceleration of a reaction of the imidazole compound represented by the following formula (C2) with an epoxy group possessed by the (A) epoxy compound and a carboxyl group, a hydroxyl group, or an acid anhydride group possessed by the reactive non-epoxy compound (B) enables formation of a cured article having excellent mechanical properties within a short time even if a curable composition is cured at a low temperature. 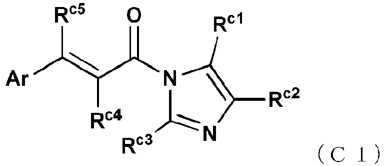 (where in the formula (C1), R^{c1}, R^{c2}, and R^{c3} each independently represent a hydrogen atom, a halogen atom, a hydroxyl group, a mercapto group, a sulfide group, a silyl group, a silanol group, a nitro group, a nitroso group, a sulfonato group, a phosphino group, a phosphinyl group, a phosphonato group, or an organic group; R^{c4} and R^{c5} each independently represent a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, or an organic group; and Ar is an optionally substituted aromatic group) 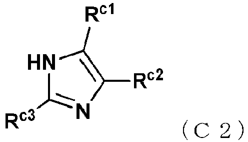 (in the formula (C2), R^{c1}, R^{c2}, and R^{c3} are the same as those in the formula (C1))

Examples of the organic group in R^{c1}, R^{c2}, and R^{c3} in the formula (C1) include an alkyl group, an alkenyl group, a cycloalkyl group, a cycloalkenyl group, an aryl group, an aralkyl group, and the like. This organic group may include a bond or a substituent other than a hydrocarbon group, such as heteroatoms in the organic group. This organic group may be linear, branched, or cyclic. This organic group is usually a monovalent, and can become a divalent or higher polyvalent organic group when a cyclic structure is formed.

R^{c1} and R^{c2} may be combined to form a cyclic structure, and they may further include a bond of hetero atoms. Examples of the cyclic structure include a heterocycloalkyl group, a heteroaryl group, and the like, and the cyclic structure may be a fused ring.

There is no particular limitation on the bond included in the organic group of R^{c1}, R^{c2}, and R^{c3} as long as the effects of the present invention are not impaired, and the organic group may include a bond including heteroatoms such as an oxygen atom, a nitrogen atom, and a silicon atom. Specific examples of the bond having heteroatoms include an ether bond, a thioether bond, a carbonyl bond, a thiocarbonyl bond, an ester bond, an amide bond, a urethane bond, an imino bond (-N=C(-R)-, -C(=NR)-: R represents a hydrogen atom or an organic group), a carbonate bond, a sulfonyl bond, a sulfinyl bond, an azo bond, and the like.

From the viewpoint of heat resistance of an imidazole compound, the bond including heteroatoms, which may be possessed by an organic group of R^{c1}, R^{c2}, and R^{c3}, is preferably an ether bond, a thioether bond, a carbonyl bond, a thiocarbonyl bond, an ester bond, an amide bond, a urethane bond, an imino bond (-N=C(-R)-, -C(=NR)-: R represents a hydrogen atom or a monovalent organic group), a carbonate bond, a sulfonyl bond, or a sulfinyl bond.

When R^{c1}, R^{c2}, and R^{c3} are substituents other than a hydrocarbon group, R^{c1}, R^{c2}, and R^{c3} are not particularly limited as long as the effects of the present invention are not impaired. Specific examples of R^{c1}, R^{c2}, and R^{c3} include a halogen atom, a hydroxyl group, a mercapto group, a sulfide group, a cyano group, an isocyano group, a cyanato group, an isocyanato group, a thiocyanato group, an isothiocyanato group, a silyl group, a silanol group, an alkoxy group, an alkoxycarbonyl group, a carbamoyl group, a thiocarbamoyl group, a nitro group, a nitroso group, a carboxylato group, an acyl group, an acyloxy group, a sulfino group, a sulfonato group, a phosphino group, a phosphinyl group, a phosphonato group, an alkyl ether group, an alkenyl ether group, an alkylthioether group, an alkenylthioether group, an aryl ether group, an arylthioether group, and the like. The hydrogen atom included in the above substituent may be substituted with a hydrocarbon group. The hydrocarbon group included in the above substituent may be linear, branched, or cyclic.

R^{c1}, R^{c2}, and R^{c3} are preferably a hydrogen atom, an alkyl group having 1 to 12 carbon atoms, an aryl group having 1 to 12 carbon atoms, an alkoxy group having 1 to 12 carbon atoms, or a halogen atom, and more preferably a hydrogen atom.

In the formula (C1), R^{c4} and R^{c5} each independently represent a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, or an organic group.

Examples of the organic group in R^{c4} and R^{c5} are the same as those listed for R^{c1}, R^{c2}, and R^{c3}. This organic group may include heteroatoms in the organic group, similar to the case of R^{c1}, R^{c2}, and R^{c3}. This organic group may be linear, branched, or cyclic.

In the formula (C1), Ar is an optionally substituted aromatic group. The aromatic group may be either an aromatic hydrocarbon group or an aromatic heterocycle group. Examples of the aromatic group include a phenyl group, a naphthyl group, a biphenylyl group, an anthryl group, a phenanthryl group, a pyridyl group, a furyl group, a thienyl group, an imidazolyl group, a pyrazolyl group, an oxazolyl group, a thiazolyl group, an isoxazolyl group, an isothiazolyl group, a benzooxazolyl group, a benzothiazolyl group, and a benzoimidazolyl group. Of these aromatic groups, a phenyl group and a thienyl group are preferable.

Specific examples of the substituent, which may be possessed by an aromatic group, are the same as those of R^{c1}, R^{c2}, and R^{c3}.

Examples of suitable compounds of the compound represented by the formula (C1) include a compound represented by the following formula (C3). 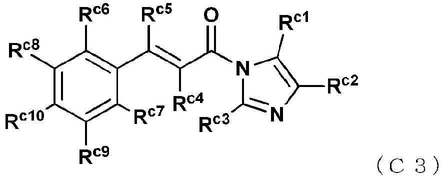 (where in the formula (C3), R^{c1}, R^{c2}, and R^{c3} each independently represent a hydrogen atom, a halogen atom, a hydroxyl group, a mercapto group, a sulfide group, a silyl group, a silanol group, a nitro group, a nitroso group, a sulfonato group, a phosphino group, a phosphinyl group, a phosphonato group, or an organic group. R^{c4} and R^{c5} each independently represent a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, or an organic group. R⁶, R⁷, R⁸, R⁹, and R¹⁰ each independently represent a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, an amino group, an ammonio group, or an organic group. At least two of R^{c6}, R^{c7}, R^{c8}, R^{c9}, and R^{c10} may be combined to form a cyclic structure, and they may further include a bond of hetero atoms.)

In the formula (C3), R^{c1}, R^{c2}, and R^{c3} are the same as those described for formula (C1).

In the formula (C3), R^{c4} and R^{c5} each independently represent a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, or an organic group.

Examples of the organic group in R^{c4} and R^{c5} include those listed for R^{c1}, R^{c2}, and R^{c3}. This organic group may include heteroatoms in the organic group, similar to the case of R^{c1}, R^{c2}, and R^{c3}. This organic group may be linear, branched, or cyclic.

Of these substituents, R^{c4} and R^{c5} are preferably each independently a hydrogen atom, an alkyl group having 1 to 10 carbon atoms, a cycloalkyl group having 4 to 13 carbon atoms, a cycloalkenyl group having 4 to 13 carbon atoms, an aryloxyalkyl group having 7 to 16 carbon atoms, an aralkyl group having 7 to 20 carbon atoms, an alkyl group having 2 to 11 carbon atoms substituted with a cyano group, an alkyl group having 1 to 10 carbon atoms substituted with a hydroxyl group, an alkoxy group having 1 to 10 carbon atoms, an amide group having 2 to 11 carbon atoms, an alkylthio group having 1 to 10 carbon atoms, an acyl group having 1 to 10 carbon atoms, an ester group having 2 to 11 carbon atoms (-COOR, -OCOR: R represents a hydrocarbon group), an aryl group having 6 to 20 carbon atoms, an aryl group having 6 to 20 carbon atoms substituted with an electron-donating group and/or an electron-withdrawing group, a benzyl group substituted with an electron-donating group and/or an electron-withdrawing group, a cyano group, or a methylthio group. More preferably, both R^{c4} and R^{c5} are hydrogen atoms, or R^{c4} is a methyl group and R^{c5} is a hydrogen atom.

In the formula (C3), R^{c6}, R^{c7}, R^{c8}, R^{c9}, and R^{c10} each independently represent a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, an amino group, an ammonio group, or an organic group.

Examples of the organic group in R^{c6}, R^{c7}, R^{c8}, R^{c9}, and R^{c10} are the same as those listed for R^{c1}, R^{c2}, and R^{c3}. This organic group may include a bond or a substituent other than a hydrocarbon group, such as heteroatoms in the organic group, similar to the case of R^{c1} and R^{c2}. This organic group may be linear, branched, or cyclic.

At least two of R^{c6}, R^{c7}, R^{c8}, R^{c9}, and R^{c10} may be combined to form a cyclic structure, and they may further include a bond of hetero atoms. Examples of the cyclic structure include a heterocycloalkyl group, a heteroaryl group, and the like, and the cyclic structure may be a fused ring. For example, two or more of R^{c6}, R^{c7}, R^{c8}, R^{c9}, and R^{c10} may be combined together with atoms of the benzene ring to which R^{c6}, R^{c7}, R^{c8}, R^{c9}, and R^{c10} are attached to form a fused ring such as naphthalene, anthracene, phenanthrene, or indene.

Of these substituents, R^{c6}, R^{c7}, R^{c8}, R^{c9}, and R^{c10} are preferably each independently a hydrogen atom, an alkyl group having 1 to 10 carbon atoms, a cycloalkyl group having 4 to 13 carbon atoms, a cycloalkenyl group having 4 to 13 carbon atoms, an aryloxyalkyl group having 7 to 16 carbon atoms, an aralkyl group having 7 to 20 carbon atoms, an alkyl group having 2 to 11 carbon atoms substituted with a cyano group, an alkyl group having 1 to 10 carbon atoms substituted with a hydroxyl group, an alkoxy group having 1 to 10 carbon atoms, an amide group having 2 to 11 carbon atoms, an alkylthio group having 1 to 10 carbon atoms, an acyl group having 1 to 10 carbon atoms, an ester group having 2 to 11 carbon atoms, an aryl group having 6 to 20 carbon atoms, an aryl group having 6 to 20 carbon atoms substituted with an electron-donating group and/or an electron-withdrawing group, a benzyl group substituted with an electron-donating group and/or an electron-withdrawing group, a cyano group, a methylthio group, or a nitro group.

It is also preferred that two or more R^{c6}, R^{c7}, R^{c8}, R^{c9}, and R^{c10} are combined together with atoms of the benzene ring to which R^{c6}, R^{c7}, R^{c8}, R^{c9}, and R^{c10} are attached to form a fused ring such as naphthalene, anthracene, phenanthrene, or indene in view of increasing an absorption wavelength.

Of the compound represented by the formula (C3), a compound represented by the following formula (C4) is preferable. 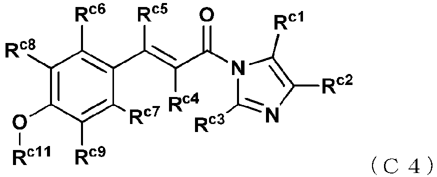 (where in the formula (C4), R^{c1}, R^{c2}, and R^{c3} are the same as those in the formulae (C1) and (C3). R^{c4} to R^{c9} are the same as those in the formula (C3). R^{c11} represents a hydrogen atom or an organic group. Both R^{c6} and R^{c7} are not hydroxyl groups. At least two of R^{c6}, R^{c7} , R^{c8}, and R^{c9} may be combined to form a cyclic structure, and they may further include a bond of hetero atoms.)

The compound represented by the formula (C4) has a substituent -O-R^{c11}, and therefore it is easily uniformly soluble in a curable composition.

In the formula (C4), R^{c11} is a hydrogen atom or an organic group. When R^{c11} is an organic group, examples of the organic group include those listed for R^{c1}, R^{c2}, and R^{c3}. This organic group may have heteroatoms in the organic group. This organic group may be linear, branched, or cyclic. R^{c11} is preferably a hydrogen atom or an alkyl group having 1 to 12 carbon atoms, and more preferably a methyl group.

Specific examples of particularly suitable compounds of the compound represented by the formula (C1) are shown below.

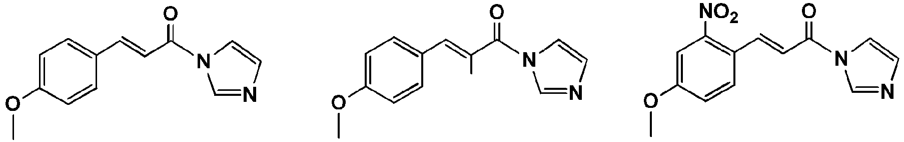

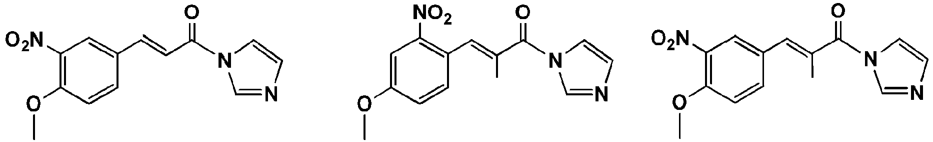

There is no particular limitation on the content of (C) a compound represented by the formula (C1) in the curable composition as long as the object of the present invention is not impaired. The content of (C) a compound represented by the formula (C1) in the curable composition is preferably 0.1 to 10% by mass, more preferably 0.5 to 7% by mass, and further preferably 1 to 3.0% by mass, based on the total of the mass of components other than the (S) solvent in the curable composition. (D) Curing Accelerator

The curable composition may contain a (D) curing accelerator. Suitable examples of the curing accelerator include an oxime ester compound, an α-aminoalkylphenone-based compound, an acylphosphine oxide-based compound, and an imidazole compound.

The oxime ester compound is not particularly limited as long as it is a compound in which two organic groups are combined through an oxime ester bond represented by =N-O-CO-. Suitable oxime ester compounds include the following compounds.

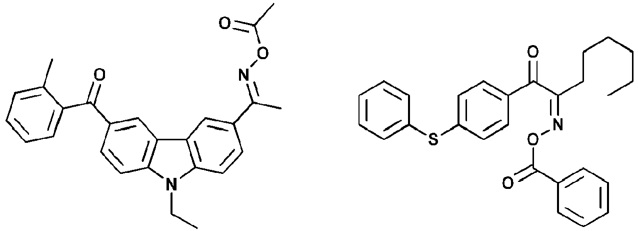

Specific examples of the α-aminoalkylphenone-based compound include 2-methyl-1-(4-methylthiophenyl)-2-morpholinopropan-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone.

Specific examples of the acylphosphine oxide-based compound include 2,4,6-trimethylbenzoyl-diphenyl-phosphine oxide and bis(2,4,6-trimethylbenzoyl)-phenylphosphine oxide.

Specific examples of the imidazole compound include 1-cyanoethyl-2-phenylimidazole, 2,4-diamino-6-[2'-methylimidazolyl-(1')]-ethyl-s-triazineisocyanuric acid adduct (2MA-OK, manufactured by SHIKOKU CHEMICALS CORPORATION), 2,4-diamino-6-[2'-methylimidazolyl-(1')]-ethyl-s-triazine (2MZ-A, manufactured by SHIKOKU CHEMICALS CORPORATION), 2-phenyl-4,5-dihydroxymethylimidazole (2PHZ, manufactured by SHIKOKU CHEMICALS CORPORATION), 2-phenyl-4-methyl-5-hydroxymethylimidazole (2P4MHZ, manufactured by SHIKOKU CHEMICALS CORPORATION), and the like.

Of the above (D) curing accelerators, an oxime ester compound, an α-aminoalkylphenone-based compound, and an acylphosphine oxide-based compound may be used together with an auxiliary capable of further enhancing the curing acceleration effect.

Specific examples of the auxiliary include benzophenones such as benzophenone, 3-hydroxybenzophenone, 4-hydroxybenzophenone, 4,4-dihydroxybenzophenone, 2-methylbenzophenone, 3-methylbenzophenone, 4-methylbenzophenone, 2,5-dimethylbenzophenone, 3,4-dimethylbenzophenone, 4-methoxybenzophenone, 4,4-dimethoxybenzophenone, 3,3-dimethyl-4-methoxybenzophenone, and 4-phenylbenzophenone; acetophenones such as acetophenone, 4-methoxyacetophenone, 2,4-dimethoxyacetophenone, 2,5-dimethoxyacetophenone, 2,6-dimethoxyacetophenone, 4,4-dimethoxyacetophenone, 4-ethoxyacetophenone, diethoxyacetophenone, 2,2-diethoxyacetophenone, 2-ethoxy-2-phenylacetophenone, and 4-phenylacetophenone; anthraquinones such as anthraquinone, hydroxyanthraquinone, 1-nitroanthraquinone, aminoanthraquinone, 2-chloroanthraquinone, 2-methylanthraquinone, 2-ethylanthraquinone, anthraquinonesulfonic acid, 1,2-benzanthraquinone, and 1,4-hydroxyanthraquinone (quinizarin); anthracenes such as anthracene, 1,2-benzoanthracene, 9-cyanoanthracene, 9,10-dicyanoanthracene, 2-ethyl-9,10-dimethoxyanthracene, and 9,10-bis(phenylethyl)anthracene; quinones such as 2,3-dichloro-6-dicyano-p-benzoquinone, 2,3-dimethoxy-5-methyl-1,4-benzoquinone, methoxybenzoquinone, 2,5-dichloro-p-benzoquinone, 2,6-dimethyl-1,4-benzoquinone, 9,10-phenanthrenequinone, camphor quinone, 2,3-dichloro-1,4-naphthoquinone, and xanthone; thioxanes such as thioxanthone, 2-methylthioxanthone, 2,4-dimethylthioxanthone, isopropylthioxanthone, 2,4-diethylthioxanthone, and 2,4-isopropylthioxanthone; cycloheptanes such as dibezosuberone, dibenzosuberene, dibenzosuberenol, and dibenzosuberane; aromatic compounds such as 2-methoxynaphthalene, benzoin isopropyl ether, 4-benzoyldiphenyl, o-benzoylbenzoic acid, methyl o-benzoylbenzoate, 4-benzoyl-4-methyl-diphenyl sulfide, benzyl, and benzoinmethyl ether; and pigment compounds such as coumarins, thiazines, azines, acridines, and xanthenes.

The content of the (D) curing accelerator in the curable composition is preferably 0.1 to 10% by mass, and more preferably 0.1 to 5% by mass, based on the total of the mass of components other than the (S) solvent in the curable composition. When the auxiliary is used together with the (D) curing accelerator, the content of the auxiliary in the curable composition is preferably 0.1 to 10% by mass, and more preferably 0.1 to 5% by mass, based on the total of the mass of components other than the (S) solvent in the curable composition.

### (E) Other Components

If necessary, it is possible to allow the curable composition to contain additives, for example, a filler such as a rubber particle, a surfactant, a thermal polymerization inhibitor, a defoamer, a silane coupling agent, and the like. It is possible to use any conventionally known additives. Examples of the surfactant include anionic, cationic, and nonionic compounds; examples of the thermal polymerization inhibitor include hydroquinone, hydroquinone monoethyl ether, and the like; and examples of the defoamer include silicone-based and fluorine-based compounds.

### (S) Solvent

The curable composition may include a (S) solvent so as to improve coatability and to adjust viscosity.

Specific examples of the (S) solvent include (poly)alkylene glycol monoalkyl ethers such as ethylene glycol monomethyl ether, ethylene glycol monoethyl ether, ethylene glycol mono-n-propyl ether, ethylene glycol mono-n-butyl ether, diethylene glycol monomethyl ether, diethylene glycol monoethyl ether, diethylene glycol mono-n-propyl ether, diethylene glycol mono-n-butyl ether, triethylene glycol monomethyl ether, triethylene glycol monoethyl ether, propylene glycol monomethyl ether, propylene glycol monoethyl ether, propylene glycol mono-n-propyl ether, propylene glycol mono-n-butyl ether, dipropylene glycol monomethyl ether, dipropylene glycol monoethyl ether, dipropylene glycol mono-n-propyl ether, dipropylene glycol mono-n-butyl ether, tripropylene glycol monomethyl ether, and tripropylene glycol monoethyl ether; (poly)alkylene glycol monoalkyl ether acetates such as ethylene glycol monomethyl ether acetate, ethylene glycol monoethyl ether acetate, diethylene glycol monomethyl ether acetate, diethylene glycol monoethyl ether acetate, propylene glycol monomethyl ether acetate (PGMEA), and propylene glycol monoethyl ether acetate; other ethers such as diethylene glycol dimethyl ether, diethylene glycol methyl ethyl ether, diethylene glycol diethyl ether, and tetrahydrofuran; ketones such as acetone, methyl ethyl ketone, cyclohexanone, 2-heptanone, and 3-heptanone; lactic acid alkyl esters such as methyl 2-hydroxypropionate and ethyl 2-hydroxypropionate; other esters such as ethyl 2-hydroxy-2-methylpropionate, methyl 3-methoxypropionate, ethyl 3-methoxypropionate, methyl 3-ethoxypropionate, ethyl 3-ethoxypropionate, ethoxyethyl acetate, hydroxyethyl acetate, methyl 2-hydroxy-3-methylbutanoate, 3-methoxybutyl acetate, 3-methyl-3-methoxybutyl acetate, 3-methyl-3-methoxybutylpropionate, ethyl acetate, n-propyl acetate, i-propyl acetate, n-butyl acetate, i-butyl acetate, n-pentyl formate, i-pentyl acetate, n-butyl propionate, ethyl butyrate, n-propyl butyrate, i-propyl butyrate, n-butyl butyrate, methyl pyruvate, ethyl pyruvate, n-propyl pyruvate, methyl acetoacetate, ethyl acetoacetate, and ethyl 2-oxobutanoate; aromatic hydrocarbons such as toluene and xylene; amides such as N-methylpyrrolidone, N,N-dimethylformamide, and N,N-dimethylacetamide; and the like. Of these solvents, alkylene glycol monoalkyl ethers, alkylene glycol monoalkyl ether acetates, the above-mentioned other ethers, lactic acid alkyl esters, and the above-mentioned other esters are preferable, and alkylene glycol monoalkyl ether acetates, the above-mentioned other ethers, and the above-mentioned other esters are more preferable.

There is no particular limitation on the content of the (S) solvent in the curable composition. The content of the (S) solvent in the curable composition is appropriately adjusted in consideration of handleability of the curable composition, such as coatability. Typically, the concentration of components other than the (S) solvent in the curable composition is preferably 10% by mass or more, more preferably 15% by mass or more, and particularly preferably 20% by mass or more and 70% by mass or less. Curable composition of the present invention may not substantially include (S) solvent. In this case, the content of the (S) solvent is preferably 10% by mass or less, more preferably 5% by mass or less, and particularly preferably substantially 0% by mass.

### Method for Producing Curable Composition

A curable composition can be produced by uniformly mixing the above-described components in a predetermined ratio. Examples of the mixer usable in the production of the curable composition include a two-roll mill, a three-roll mill, and the like. In order to cure the curable composition containing the above-described components at a low temperature of about 130°C within a short time, a mixing operation in the case of preparing the curable composition is preferably performed at room temperature to about 40°C. When the curable composition has sufficiently low viscosity, if necessary, the curable composition may be filtered using a filter having a desired hole size so as to remove insoluble foreign substances.

The curable composition thus produced is curable at a low temperature within a short time, and also exhibits a long pot life. Such a curable composition satisfactorily adheres to various materials, and therefore it can be suitably used in various applications similar to a conventional curable composition containing an epoxy compound.

### Curing Method of Curable Composition

There is no particular limitation on temperature and time in the case of curing the above-described curable composition as long as curing sufficiently proceeds, and the above-mentioned curable composition is curable at a low temperature within a short time. Specifically, the curable composition is cured at a temperature of about 100 to 160°C for about 3 to 10 minutes. The curable composition is curable at a low temperature, but can also be cured at a high temperature. There is no particular limitation on the curing temperature of the curable composition as long as it is a temperature at which neither thermal composition of components contained in the curable composition, nor volatilization or sublimation of components other than the (S) solvent occurs.

### Adhesive

The above-described curable composition contains an (A) epoxy compound which has conventionally been blended in various adhesives, and is therefore satisfactorily usable as an adhesive for adhesion of various materials. A method for use of the adhesive is the same as that of a conventional adhesive containing an epoxy compound. Specific adhesion methods include a method in which an adhesive is applied or injected at least one predetermined place in plural adherends, and plural adherends are fixed in a desired state, followed by heating.

As mentioned above, a cured article of the curable composition satisfactorily adheres to various materials. Therefore, the above-described curable composition can also be used as a sealing material of electronic components, for example, various semiconductor elements.

### Fiber-Reinforced Composite Material

The above-described curable composition can be suitably used as a material for formation of a matrix in a fiber-reinforced composite material comprising a matrix and a reinforcing fiber.

The reinforcing fiber is not particularly limited as long as it has conventionally been used in the production of a fiber-reinforced composite material. The reinforcing fiber may be a twisted yarn, an untwisting yarn, or an untwisted yarn, and is preferably an untwisting yarn or an untwisted yarn in view of moldability and mechanical strength of the fiber-reinforced composite material.

There is no particular limitation on the form of the reinforcing fiber. Short fibers of the reinforcing fiber may be dispersed in a matrix, or long fibers aligned in one direction of the reinforcing fiber or a woven fabric or a nonwoven fabric of the reinforcing fiber may be coated with a matrix. When the reinforcing fiber is a woven fabric, a weaving method thereof can be freely selected from a plain weave, satin weave, and the like according to application sections and applications.

Examples of the reinforcing fiber include a carbon fiber, a glass fiber, an aramid fiber, a boron fiber, an alumina fiber, a silicon carbide fiber, and the like in view of mechanical strength and durability of the fiber-reinforced composite material. Two or more reinforcing fibers may be used in combination. Of these reinforcing fibers, a carbon fiber is preferable because of particularly excellent strength of the fiber-reinforced composite material. It is possible to use, as the carbon fiber, polyacrylonitrile-based, pitch-based, and rayon-based carbon fibers. Of these carbon fibers, a polyacrylonitrile-based carbon fiber is preferable.

The volume content of the reinforcing fiber in the fiber-reinforced composite material comprising a matrix and a reinforcing fiber is appropriately selected in accordance with the strength or shape of the fiber-reinforced composite material. Typically, the volume content is preferably 40 to 85% by volume, and more preferably 50 to 70% by volume.

There is no particular limitation on a method for producing a fiber-reinforced composite material. After impregnating a reinforcing fiber with a curable composition in accordance with a known method, the curable composition is cured under predetermined conditions, thus producing a fiber-reinforced composite material. Since the curable composition is cured at a low temperature within a short time, it is possible to produce a fiber-reinforced composite material in a high cycle manner by using the above curable composition while reducing energy required for curing.

### EXAMPLES

The present invention will be described in more detail by way of Examples. The present invention is not limited to the scope of Examples.

### Examples 1 to 11 and Comparative Examples 1 to 20

In Examples and Comparative Examples, the following (A) epoxy compounds, EP1 to EP6, were used as the component (A). Regarding EP-6, the numeral placed at the lower right part of parentheses in each repeating unit represents the content (% by mass) of each unit in an epoxy group-containing resin, EP-6. A weight average molecular weight is 7,000.

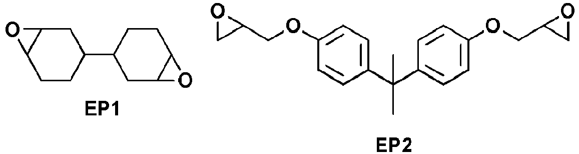

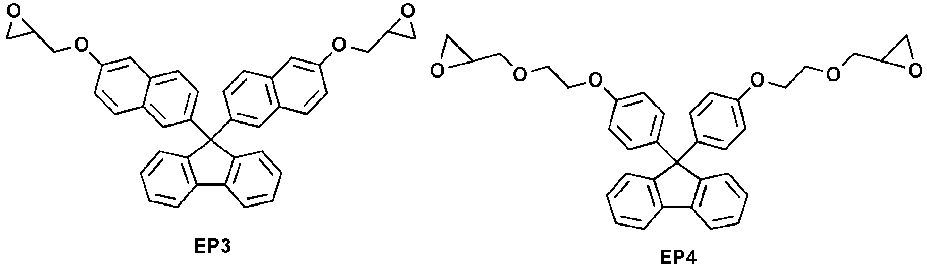

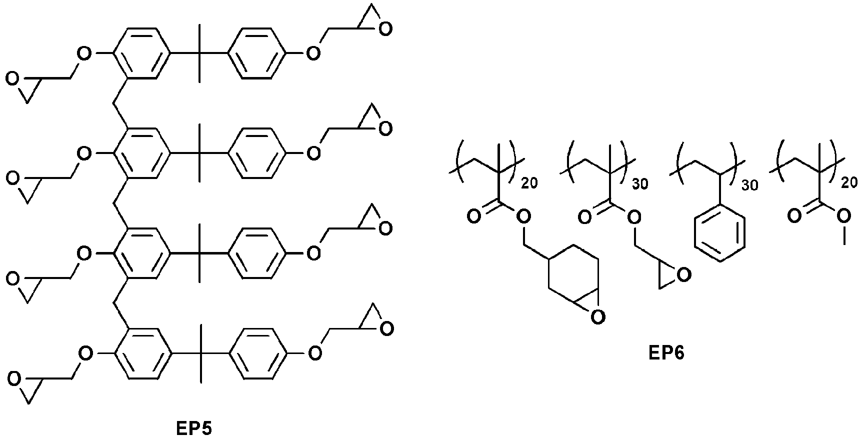

In Examples and Comparative Examples, the following CA1 and CA2 were used as the component (B) which is a crosslinking agent.
CA1: 4,4'-Diaminodiphenyl ether
CA2: Dicyandiamide
CA3: 4-Methylhexahydrophthalic anhydride (MHHPA)
CA4: Tetrahydrophthalic anhydride (THPA)

In Examples and Comparative Examples, the following IG1 to IG3 as (C) a compound represented by the formula (C1), or IG4 (1-methylimidazole) which is a component similar to a (C) compound represented by the formula (C1) was used as the component (C).

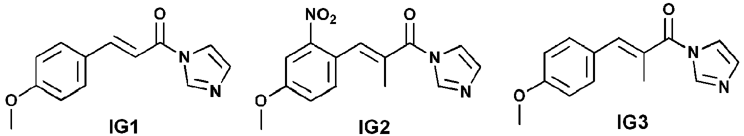

Using a three-roll mill, a component (A), a component (B), and a component (C), whose type and amount are shown in Table 1, were uniformly mixed to obtain curable compositions of the Examples and Comparative Examples. Solid concentrations of curable compositions comprising EP3, EP5 or EP6 were adjusted by adding methylethylketone.

Using the curable compositions thus obtained, low temperature curability and bottle stability were evaluated in accordance with the following procedures. These evaluation results are shown in Table 1.

### Evaluation of Low Temperature Curability

A curable composition was injected into a space of 2 mm in width formed between two molds. The curable composition injected into the space was heated for 5 minutes and then the molds were removed to obtain a 2 mm thick plate-like specimen. Confirmation of whether a specimen reached a state in which a surface thereof is free from tackiness, and this was used as a guide of curing.

Specimens cured at a heating temperature of lower than 140°C were rated "A", specimens cured at a heating temperature of 140°C or higher and lower than 160°C were rated "B", and specimens requiring a heating temperature of higher than 160°C were rated "C".

### Evaluation of Bottle Stability

Viscosity (cP) of the curable composition immediately after preparation was measured using an E type viscometer (Model TV-20, corn plate type, manufactured by TOKI SANGYO CO., LTD.). The viscosity of the curable composition was measured after storage at 25°C for 3 and 7 days. The case where the viscosity after storage for 3 days increased by 20 cP or more in comparison with initial viscosity was rated "C". The case where an increase in viscosity after storage for 3 days is less than 20 cP in comparison with initial viscosity, but the viscosity after storage for 7 days increased by 20 cP or more in comparison with initial viscosity was rated "B". The case where the viscosity after storage for 7 days increased by less than 20 cP in comparison with initial viscosity was rated "A".

**[Table 1]**

| | Types and contents of components (type / parts by mass) | | | Low temperature curability | Bottle stability |
|---|---|---|---|---|---|
| | (A) | (B) | (C) | | |
| Example 1 | EP1/90 | CA2/5 | IG1/5 | A | A |
| Example 2 | EP1/90 | CA1/5 | IG3/5 | A | A |
| Example 3 | EP2/90 | CA2/5 | IG1/5 | A | A |
| Example 4 | EP2/90 | CA2/5 | IG1/5 | A | A |
| Example 5 | EP2/90 | CA2/5 | IG2/5 | B | A |
| Example 6 | EP2/90 | CA2/5 | IG3/5 | A | A |
| Example 7 | EP3/90 | CA1/5 | IG1/5 | A | A |
| Example 8 | EP4/90 | CA2/5 | IG1/5 | A | A |
| Example 9 | EP5/90 | CA2/5 | IG2/5 | A | A |
| Example 10 | EP6/90 | CA1/5 | IG2/5 | B | A |
| Example 11 | EP6/90 | CA2/5 | IG3/5 | A | A |
| Example 12 | EP1/90 | CA3/5 | IG1/5 | A | A |
| Example 13 | EP1/85 | CA3/7, CA4/3 | IG1/5 | A | A |
| Example 14 | EP2/90 | CA3/5 | IG1/5 | A | A |
| Example 15 | EP2/85 | CA3/7, CA4/3 | IG1/5 | A | A |
| Example 16 | EP3/90 | CA3/5 | IG1/5 | A | A |
| Example 17 | EP3/85 | CA3/7, CA4/3 | IG1/5 | A | A |
| Example 18 | EP4/90 | CA3/5 | IG1/5 | A | A |
| Example 19 | EP4/85 | CA3/7, CA4/3 | IG1/5 | A | A |
| Example 20 | EP5/90 | CA3/5 | IG1/5 | A | A |
| Example 21 | EP5/85 | CA3/7, CA4/3 | IG1/5 | A | A |
| Example 22 | EP6/90 | CA3/5 | IG1/5 | B | A |
| Example 23 | EP6/85 | CA3/7, CA4/3 | IG1/5 | B | A |
| Comp. Example 1 | EP1/90 | CA1/5 | IG4/5 | A | C |
| Comp. Example 2 | EP1/90 | CA2/5 | IG4/5 | A | C |
| Comp. Example 3 | EP2/90 | CA1/5 | IG4/5 | A | C |
| Carp. Example 4 | EP2/90 | CA2/5 | IG4/5 | A | C |
| Comp. Example 5 | EP3/90 | CA1/5 | IG4/5 | A | C |
| Comp. Example 6 | EP3/90 | CA2/5 | IG4/5 | A | C |
| Comp. Example 7 | EP4/90 | CA1/5 | IG4/5 | A | C |
| Comp. Example 8 | EP5/90 | CA2/5 | IG4/5 | A | C |
| Comp. Example 9 | EP6/90 | CA1/5 | IG4/5 | A | C |
| Comp. Example 10 | EP6/90 | CA2/5 | IG4/5 | A | C |
| Comp. Example 11 | EP1/90 | CA1/10 | - | C | A |
| Comp. Example 12 | EP1/90 | CA2/10 | - | C | A |
| Comp. Example 13 | EP2/90 | CA1/10 | - | C | A |
| Comp. Example 14 | FP2/90 | CA2/10 | - | C | A |
| Comp. Example 15 | EP3/90 | CA1/10 | - | C | A |
| Comp. Example 16 | EP3/90 | CA2/10 | - | C | A |
| Comp. Example 17 | EP4/90 | CA1/10 | - | C | A |
| Comp. Example 18 | EP5/90 | CA2/10 | - | C | A |
| Comp. Example 19 | EP6/90 | CA1/10 | - | C | A |
| Comp. Example 20 | EP6/90 | CA2/10 | - | C | A |

As is apparent from Examples 1 to 23, the curable compositions including a component (A), a component (B), and a component (C), each having a predetermined structure, are curable at a low temperature within a short time, and also exhibit a long pot life.

As is apparent from Comparative Examples 1 to 10, the curable compositions including an epoxy compound as a component (A) and a component (B) having a predetermined structure, and also including, as a component (C), 1-methylimidazole in place of a compound represented by the formula (C1) exhibit a significantly short pot life.

As is apparent from Comparative Examples 11 to 20, the curable compositions including an epoxy compound as a component (A) and a component (B) having a predetermined structure, and including no component (C) scarcely exert the effect of curing at a low temperature within a short time.

## Claims

1. A curable composition **characterized in that** it comprises:
an (A) epoxy compound, (B) at least one crosslinking agent selected from the group consisting of a polyhydric amine compound and a polyhydric carboxylic anhydride, and a (C) compound represented by the following formula (C1): 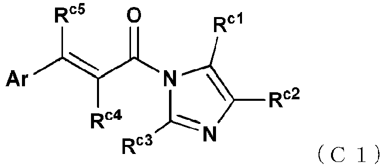 in the formula (C1), R^{c1}, R^{c2}, and R^{c3} each independently represent a hydrogen atom, a halogen atom, a hydroxyl group, a mercapto group, a sulfide group, a silyl group, a silanol group, a nitro group, a nitroso group, a sulfonato group, a phosphino group, a phosphinyl group, a phosphonato group, or an organic group; R^{c4} and R^{c5} each independently represent a hydrogen atom, a halogen atom, a hydroxyl group, a mercapto group, a sulfide group, a silyl group, a silanol group, a nitro group, a nitroso group, a sulfino group, a sulfo group, a sulfonato group, a phosphino group, a phosphinyl group, a phosphono group, a phosphonato group, or an organic group; and Ar is an optionally substituted aromatic group;
provided that said composition does not consist of:
- 50 parts by weight of 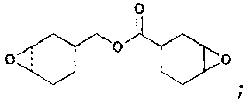
- 50 parts by weight of 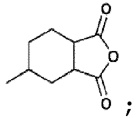
- 1.5 parts by weight of 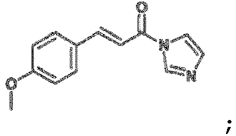 and
- 2 parts by weight of

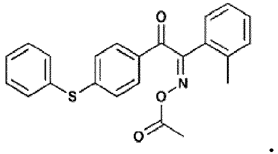

2. The curable composition according to claim 1, wherein the (B) crosslinking agent is guanidine, a substituted guanidine, and/or an aromatic diamine.

3. An adhesive **characterized in that** it comprises:
the curable composition according to claim 1 or 2.

4. A method for producing a fiber-reinforced composite material **characterized in that** it comprises:
curing the curable composition according to claim 1 or 2, in which a reinforcing fiber is impregnated, by heating.

5. A fiber-reinforced composite material **characterized in that** it comprises:
a matrix consisting of a cured article of the curable composition according to claim 1 or 2, and a reinforcing fiber.

## Patentansprüche

1. Härtbare Zusammensetzung, **dadurch gekennzeichnet, dass** sie umfasst:
eine (A) Epoxidverbindung, (B) mindestens ein Vernetzungsmittel ausgewählt aus der Gruppe bestehend aus einer mehrere Hydroxylgruppen enthaltenden Aminverbindung und einem mehrere Hydroxylgruppen enthaltenden Carbonsäureanhydrid und eine (C) Verbindung gemäß der folgenden Formel (C1): 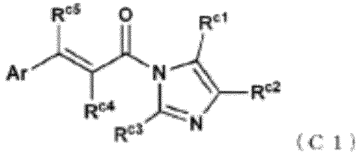 in der Formel (C1) sind R^{c1}, R^{c2} und R^{c3} unabhängig voneinander jeweils ein Wasserstoffatom, ein Halogenatom, eine Hydroxylgruppe, eine Mercaptogruppe, eine Sulfidgruppe, eine Silylgruppe, eine Silanolgruppe, eine Nitrogruppe, eine Nitrosogruppe, eine Sulfonatogruppe, eine Phosphinogruppe, eine Phosphinylgruppe, eine Phosphonatogruppe oder eine organische Gruppe; R^{c4} und R^{c5} sind unabhängig voneinander jeweils ein Wasserstoffatom, ein Halogenatom, eine Hydroxylgruppe, eine Mercaptogruppe, eine Sulfidgruppe, eine Silylgruppe, eine Silanolgruppe, eine Nitrogruppe, eine Nitrosogruppe, eine Sulfinogruppe, eine Sulfogruppe, eine Sulfonatogruppe, eine Phosphinogruppe, eine Phosphinylgruppe, eine Phosphonogruppe, eine Phosphonatogruppe oder eine organische Gruppe; und Ar ist eine gegebenenfalls substituierte aromatische Gruppe;
vorausgesetzt diese Zusammensetzung besteht nicht aus:
- 50 Gewichtsteilen von 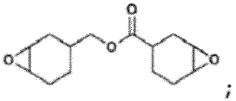
- 50 Gewichtsteilen von 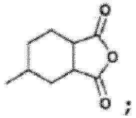
- 1,5 Gewichtsteilen von 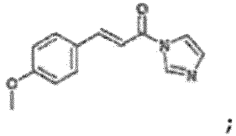 und
- 2 Gewichtsteilen von

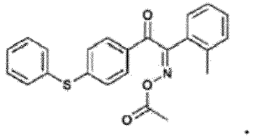

2. Härtbare Zusammensetzung gemäß Anspruch 1, wobei das (B) Vernetzungsmittel ein Guanidin, ein substituiertes Guanidin und/oder ein aromatisches Diamin ist.

3. Klebstoff, **dadurch gekennzeichnet, dass** er umfasst:
die härtbare Zusammensetzung gemäß Anspruch 1 oder 2.

4. Verfahren zur Herstellung eines faserverstärkten Verbundmaterials, **dadurch gekennzeichnet, dass** es umfasst:
Härten der härtbaren Zusammensetzung gemäß Anspruch 1 oder 2, in der eine verstärkende Faser imprägniert ist, durch Erhitzen.

5. Faserverstärktes Verbundmaterial, **dadurch gekennzeichnet, dass** es umfasst:
eine Matrix bestehend aus einem ausgehärteten Artikel aus der härtbaren Zusammensetzung gemäß Anspruch 1 oder 2 und eine verstärkende Faser.

## Revendications

1. Composition durcissable **caractérisée en ce qu'**elle comprend :
(A) un composé époxy, (B) au moins un agent de réticulation sélectionné dans le groupe constitué d'un composé amine polyhydrique et d'un anhydride carboxylique polyhydrique, et (C) un composé représenté par la formule (C1) suivante : 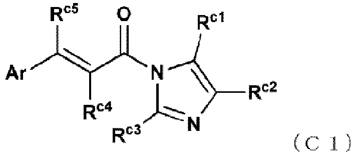 dans la formule (C1), R^{c1}, R^{c2}, et R^{c3} représentent chacun indépendamment un atome d'hydrogène, un atome d'halogène, un groupe hydroxyle, un groupe mercapto, un groupe sulfure, un groupe silyle, un groupe silanol, un groupe nitro, un groupe nitroso, un groupe sulfonato, un groupe phosphino, un groupe phosphinyle, un groupe phosphonato, ou un groupe organique ; R^{c4} et R^{c5} représentent chacun indépendamment un atome d'hydrogène, un atome d'halogène, un groupe hydroxyle, un groupe mercapto, un groupe sulfure, un groupe silyle, un groupe silanol, un groupe nitro, un groupe nitroso, un groupe sulfino, un groupe sulfo, un groupe sulfonato, un groupe phosphino, un groupe phosphinyle, un groupe phosphono, un groupe phosphonato, ou un groupe organique ; et Ar est un groupe aromatique facultativement substitué ;
à condition que ladite composition ne soit pas constituée de :
- 50 parties en poids de 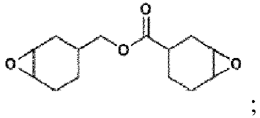
- 50 parties en poids de 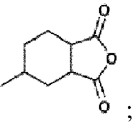
- 1,5 partie en poids de 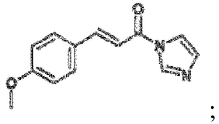 et
- 2 parties en poids de

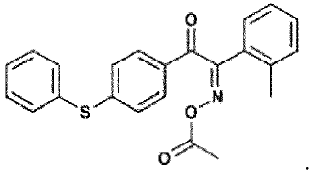

2. Composition durcissable selon la revendication 1, dans laquelle l'agent de réticulation (B) est une guanidine, une guanidine substituée, et/ou une diamine aromatique.

3. Adhésif **caractérisé en ce qu'**il comprend :
la composition durcissable selon la revendication 1 ou 2.

4. Procédé de production d'un matériau composite renforcé par des fibres **caractérisé en ce qu'**il comprend :
le durcissement de la composition durcissable selon la revendication 1 ou 2, dans laquelle est imprégnée une fibre de renforcement, par chauffage.

5. Matériau composite renforcé par des fibres **caractérisé en ce qu'**il comprend :
une matrice constituée d'un article durci de la composition durcissable selon la revendication 1 ou 2, et d'une fibre de renforcement.
